Europäisches Patentamt

European Patent Office

Office européen des brevets

(11) Numéro de publication: **0 311 499 B1**

# FASCICULE DE BREVET EUROPEEN

(45) Date de publication de fascicule du brevet: **09.12.92**

(51) Int. Cl.5: **F02B 25/20,** F02D 13/02, F02B 13/02, F02M 69/08

(21) Numéro de dépôt: **88402498.5**

(22) Date de dépôt: **04.10.88**

(54) **Moteur à deux temps à injection pneumatique et à restriction de débit à l'échappement.**

(30) Priorité: **07.10.87 FR 8713837**

(43) Date de publication de la demande:
**12.04.89 Bulletin 89/15**

(45) Mention de la délivrance du brevet:
**09.12.92 Bulletin 92/50**

(84) Etats contractants désignés:
**BE DE ES FR GB IT NL**

(56) Documents cités:
EP-A- 0 192 010          AT-A- 369 866
CH-A- 112 459            DE-A- 3 103 732
FR-A- 490 166            FR-A- 2 496 757
GB-A- 2 175 643          US-A- 1 818 796
US-A- 3 938 330

AUTOMOTIVE ENGINEERING, vol. 94, no. 8,
août 1986, pages 74-79, Warrendale, PA, US;
"Pneumatic fuel injection spurs two-stroke
revival"

IDEM.

PATENT ABSTRACTS OF JAPAN, vol. 10, no.
174 (M-490)[2230], 19 juin 1986, page 79 M

490; & JP-A-61 23 823 (YAMAHA HATSUDOKI
K.K.) 01-02-1986

PATENT ABSTRACTS OF JAPAN, vol. 8, no.
186 (M-320)[1623], 25 août 1984, page 103 M
320; & JP-A-59 77 047 (MAZDA K.K.)
02-05-1984

PATENT ABSTRACTS OF JAPAN, vol. 10, no.
174 (M-490)[2230], 19 juin 1986, page 79 M
490; & JP-A-61 23 823 (YAMAHA HATSUDOKI
K.K.) 01-02-1986

PATENT ABSTRACTS OF JAPAN, vol. 8, no.
186 (M-320)[1623], 25 août 1984, page 103 M
320; & JP-A-59 77 047 (MAZDA K.K.)
02-05-1984

(73) Titulaire: **INSTITUT FRANCAIS DU PETROLE**
**4, Avenue de Bois Préau**
**F-92502 Rueil-Malmaison(FR)**

(72) Inventeur: **Duret, Pierre**
**124, boulevard Saint Germain**
**F-75006 Paris(FR)**

EP 0 311 499 B1

# Description

L'invention concerne un moteur à deux temps à injection pneumatique de carburant et à restriction de débit à l'échappement.

Les moteurs à deux temps à un ou plusieurs cylindres comportent généralement, associé à chacun des cylindres, un carter appelé carter-pompe communiquant avec l'une des extrémités du cylindre et assurant l'introduction de gaz frais dans le cylindre, par l'intermédiaire d'au moins un conduit et une ouverture de transfert. Le piston qui se déplace de manière alternative dans le cylindre assure également l'aspiration et la compression des gaz frais dans le carter-pompe.

Un clapet d'admission disposé sur le carter-pompe permet l'introduction des gaz frais dans le carter, lorsque le piston se déplace dans la direction opposée au carter, ces gaz frais étant ensuite comprimés et assurant la fermeture du clapet, lorsque le piston se déplace en direction du carter. Lorsque les ouvertures correspondantes du cylindre sont dégagées par le piston, des gaz frais sont introduits dans le cylindre par les conduits et ouvertures de transferts et produisent un balayage de gaz frais destiné à remplacer les gaz brûlés qui sont évacués par des ouvertures d'échappement généralement disposées de façon légèrement décalée par rapport aux ouvertures de transfert.

Le piston se déplace en s'éloignant du carter, de manière à comprimer les gaz contenus dans le cylindre. L'allumage et la combustion du mélange produisent alors le déplacement moteur du piston vers le carter.

On a proposé, dans le brevet français FR-2.496.757 de l'Institut Français du Pétrole, d'assurer une injection pneumatique de carburant dans le cylindre en utilisant la pression des gaz frais à l'intérieur du carter-pompe. Pour cela, un moyen de dosage de carburant liquide est relié directement au conduit venant du carter-pompe. L'air comprimé dans le carter-pompe envoyé au doseur par l'intermédiaire du conduit assure la pulvérisation et l'injection du carburant à l'intérieur du cylindre.

Certains perfectionnements ont été apportés à ce dispositif ; on a proposé par exemple (voir EP-A-0 192 010) de placer une capacité sur le conduit reliant le carter-pompe à l'injecteur et un clapet à l'extrémité du conduit relié au carter-pompe. On constitue ainsi une réserve d'air comprimé à une pression proche de la pression maximale dans le carter-pompe au cours du cycle, cette réserve d'air comprimé servant ensuite à pulvériser le carburant et à l'introduire dans le cylindre sous forme d'air carburé, lors du déclenchement de l'injecteur.

Un des inconvénients des moteurs deux temps est la perte de rendement due au fait que les gaz frais carburés ne sont pas suffisamment séparés des gaz brûlés à l'intérieur du cylindre et sont en conséquence responsables de la création de conditions défavorables à l'initiation de la combustion.

Pour remédier à cet inconvénient, on a proposé (voir "AUTOMOTIVE ENGINEERING", Vol.94, N°8, 8/1986, pages 74-79, Warrendale, PA, US, "pneumatic fuel injection spurs two-stroke revival") de placer un organe de restriction de débit sur la conduite d'échappement du moteur, au voisinage du cylindre, pour ralentir la vidange des gaz brûlés. On obtient ainsi une stratification des gaz frais et des gaz brûlés, les gaz frais étant repoussés dans la zone du cylindre où ont lieu l'injection et l'allumage. On n'a cependant jamais utilisé une telle technique de restriction du débit d'échappement, dans le cas d'un moteur deux temps comportant un dispositif d'injection pneumatique utilisant l'air comprimé du carter-pompe.

D'autre part, dans le cas d'une injection pneumatique utilisant l'air comprimé du carter-pompe, la différence de pression entre l'air servant à l'injection et les gaz remplissant le cylindre au moment de l'injection est généralement trop faible pour assurer une bonne pulvérisation du carburant et une très grande efficacité de l'injection. Ce défaut reste sensible dans le cas où l'on utilise une capacité reliée à l'injecteur et un conduit séparé par un clapet du carter-pompe. En effet, la pression dans la capacité qui est au plus égale à la pression maximale dans le carter-pompe n'est pas suffisamment supérieure à la pression dans le cylindre au moment de l'injection, cette pression dans le cylindre subissant alors un accroissement dû à des effets d'ondes dans le conduit d'échappement.

Le but de l'invention est donc de remédier à ces inconvénients en proposant, selon un premier mode de réalisation, un moteur à deux temps selon la revendication 1 et selon un autre mode de réalisation un moteur à deux temps (multicylindres) selon la revendication 10.

De plus ce moteur comporte à l'intérieur du conduit d'échappement, au voisinage du premier cylindre, un organe de restriction du passage des gaz d'échappement en provenance de ce cylindre commandé et réglé pour son ouverture et sa fermeture, en fonction d'au moins un paramètre de fonctionnement du moteur.

Il existe un décalage angulaire non nul entre les cycles de ces deux cylindres. Ce décalage angulaire pourra être de 120°, le cycle du premier cylindre précédant de 120° le cycle du second cylindre. Le moteur pourra comporter un nombre de cylindres multiple de 3.

Ce décalage angulaire pourra être de 90°, le cycle du premier cylindre précédant de 90° le cycle du second cylindre. Le moteur pourra comporter un nombre de cylindres multiple de 4.

Le conduit d'alimentation de l'injecteur en air sous pression pourra relier directement ledit injecteur pneumatique au carter. Cela signifie que ce conduit ne constituera pas une capacité de stockage de gaz sous pression.

En conséquence, la partie de ce conduit reliant le carter à l'injecteur pneumatique pourra être avantageusement exempte de clapet anti-retour et pourra être d'un faible volume.

Afin de bien faire comprendre l'invention, on va maintenant décrire, à titre d'exemple non limitatif, en se référant aux figures jointes en annexe, un moteur à deux temps à restriction de débit à l'échappement selon l'invention et son mode de fonctionnement comparativement au mode de fonctionnement d'un moteur à deux temps suivant l'art antérieur.

- la figure 1 représente les diagrammes de pression relevés pendant le fonctionnement d'un moteur à deux temps à injection pneumatique suivant l'art antérieur,
- la figure 2 représente les diagrammes de pression relevés pendant le fonctionnement correspondant d'un moteur à injection pneumatique et à restriction de débit à l'échappement suivant l'invention,
- la figure 3 est une vue schématique en élévation et en coupe d'un moteur à deux temps suivant l'invention,
- la figure 4 est une vue à plus grande échelle d'une variante de réalisation du moyen de restriction de débit du moteur suivant l'invention,
- les figures 5, 6, 7, 8 sont des vues de dessus schématiques d'un moteur à deux temps suivant l'invention à trois cylindres dont les conduits d'échappement sont associés à un ou plusieurs organes de restriction de débit et constituent quatre variantes de réalisation du moteur suivant l'invention, et
- la figure 9 concerne un mode de réalisation suivant lequel l'injection pneumatique d'un cylindre est alimenté en gaz sous pression provenant du carter d'un autre cylindre.

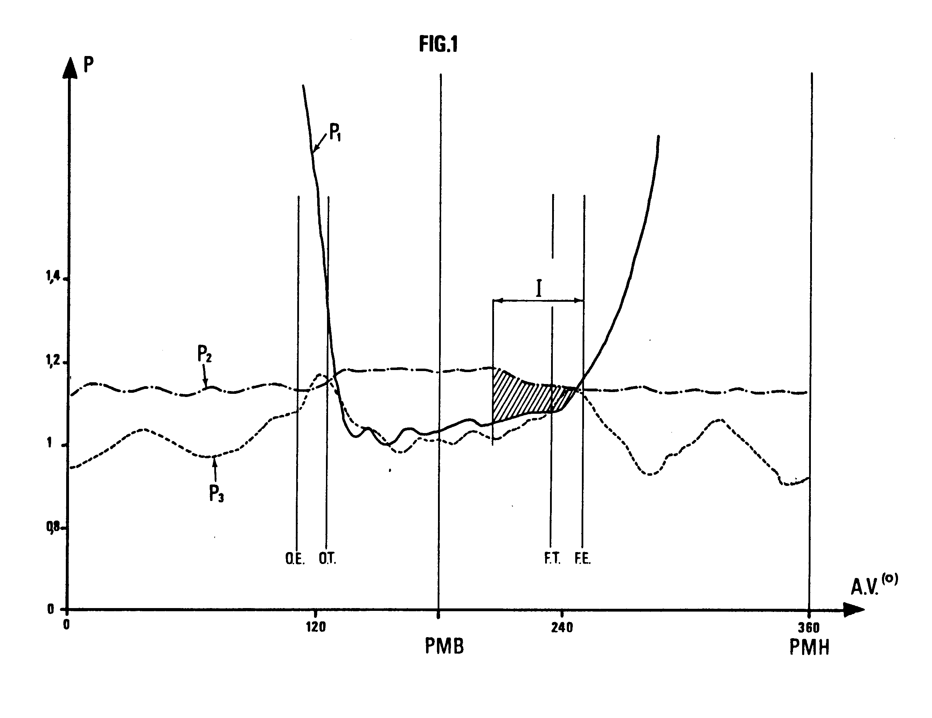

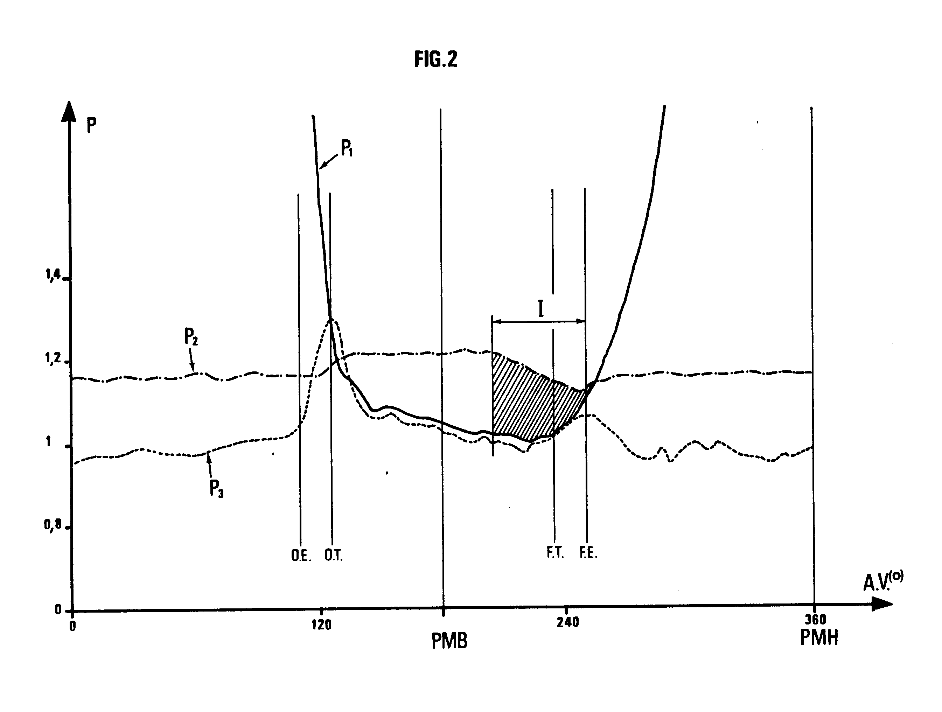

Sur la figure 1 et sur la figure 2, on a représenté les variations de la pression dans le cylindre (courbe P1), dans la capacité du dispositif d'injection pneumatique (courbe P2) et à l'entrée de la conduite d'échappement (courbe P3), en fonction de l'angle de rotation du vilebrequin, dans le cas d'un moteur selon l'art antérieur à injection pneumatique et dans le cas d'un moteur suivant l'invention, respectivement.

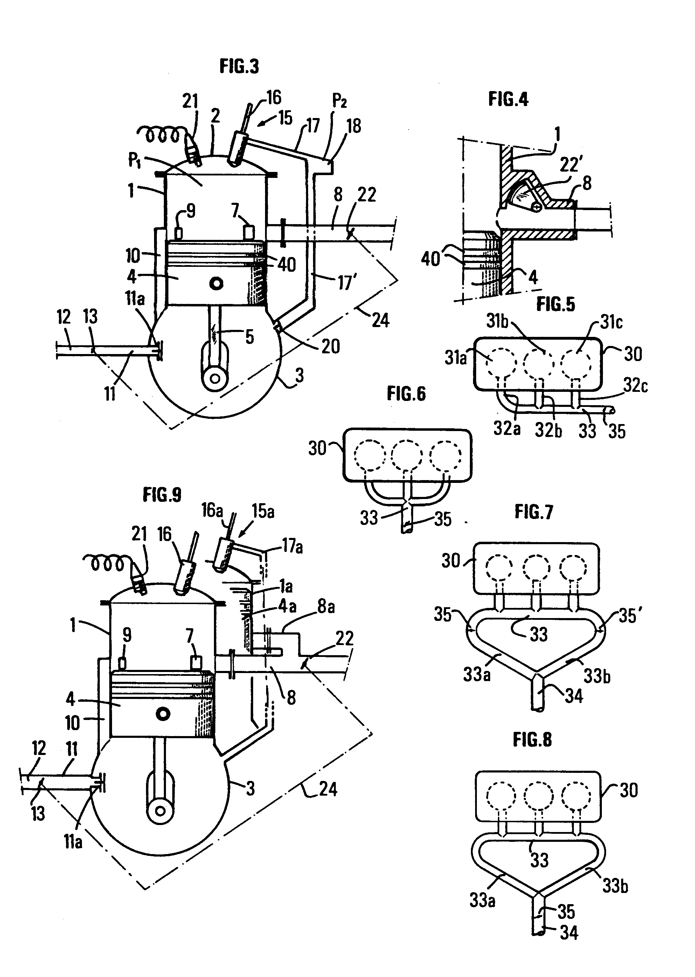

Sur la figure 3, on a représenté de manière schématique un moteur suivant l'invention à injection pneumatique et à restriction de débit à l'échappement.

Un moteur suivant l'art antérieur dont le diagramme de fonctionnement est représenté sur la figure 1 peut être décrit à partir des mêmes éléments, à l'exception de l'ensemble régulé de restriction de débit à l'échappement.

Le moteur comporte un cylindre 1 fermé à sa partie supérieure par une culasse 2 et communiquant à sa partie inférieure avec un carter-pompe 3, la chambre du cylindre 1 et la capacité intérieure du carter-pompe 3 étant disposées de part et d'autre du piston 4 se déplaçant de manière alternative à l'intérieur du cylindre 1. Le piston 4 est relié par une bielle 5 au vilebrequin 6. La paroi du cylindre 1 est percée par des ouvertures ou lumières d'échappement 7 communiquant avec un conduit d'échappement 8.

Des lumières ou ouvertures de transfert 9 placées dans une position légèrement décalée vers le bas par rapport aux lumières 7 communiquent avec un conduit de transfert 10 relié au volume intérieur du carter-pompe 3.

Le carter-pompe 3 est percé d'un orifice 11 équipé d'un clapet 11a et communiquant avec une conduite 12 d'admission d'air dans laquelle est placé un papillon 13 susceptible de fermer plus ou moins la section de passage du conduit 12.

Un injecteur pneumatique 15 fixé sur la culasse 2 débouche dans la partie supérieure du cylindre 1. L'injecteur pneumatique 15 qui peut être du type décrit et représenté sur la figure 7 du brevet français FR-2.496.757 est alimenté en carburant liquide par une conduite 16 et en air comprimé par un conduit 17 sur lequel est placé une capacité de stockage d'air comprimé 18. La capacité d'air comprimé 18 est elle-même reliée par un conduit 17' prolongeant le conduit 17 au carter pompe 3. L'orifice mettant en communication le carter 3 et le conduit 17' porte un clapet 20 qui est éloigné de son siège pour assurer la communication entre le carter 3 et le conduit 17', lorsque la pression est supérieure à une certaine limite dans le carter 3. Lorsque le clapet 20 se soulève de son siège, l'air comprimé du carter 3 peut remplir la capacité 18 dont il assure le rechargement.

L'injecteur pneumatique 15 peut comporter une tige commandée par une came assurant le début de l'injection à un moment déterminé du cycle de fonctionnement du moteur. L'air sous pression de la capacité 18 assure alors la pulvérisation du carburant amené à l'injecteur pneumatique par la conduite 16 qui peut comporter un moyen de dosage de carburant et l'introduction du carburant pulvérisé en suspension dans l'air sous pression, à l'intérieur du cylindre 1.

Une bougie d'allumage 21 est fixée sur la culasse 2.

Un organe de restriction de débit 22 constitué par un papillon est disposé à l'intérieur du conduit d'échappement 8 à proximité du cylindre 1. Le papillon 22 peut être relié au papillon 13 de la conduite 12 d'admission d'air dans le carter-pompe 3 par un ensemble de liaison et de commande articulé 24 assurant une ouverture et une fermeture du papillon 22 dépendant de l'ouverture et de la fermeture du papillon 13.

L'organe de restriction de débit 22 et ses moyens de liaison 24 au papillon 13 assurant une action proportionnelle à ces deux organes de restriction de débit constitue l'élément caractéristique essentiel du dispositif permettant d'améliorer sensiblement les performances de l'injection pneumatique, comme il sera expliqué plus loin en référence aux figures 1 et 2.

Un moteur deux temps à injection pneumatique tel que représenté sur la figure 3 fonctionne de la manière qui sera expliqué ci-dessous.

Si on suppose qu'à l'instant initial le piston 4 est à son point mort haut du mélange carburé étant comprimé dans la partie supérieure du cylindre 1, l'allumage de ce mélange par la bougie 21 produit une combustion qui repousse le piston 4 vers le bas. Au cours de son déplacement vers le bas, le cylindre 4 découvre les ouvertures d'échappement 7, puis de manière légèrement différée dans le temps, les ouvertures de transfert 9. Les gaz d'échappement sont chassés dans les conduits 8 et l'air comprimé par le piston dans le carter-pompe 3 est envoyé dans le cylindre par les conduits de transfert 10.

La pression de l'air dans le carter pompe 3 augmente jusqu'à un maximum, le clapet 11a étant fermé. Quand la pression de l'air dans le carter-pompe 3 dépasse celle de la capacité, le clapet 20 s'ouvre et la capacité 18 est rechargée en air à une pression voisine de la pression maximale dans le carter-pompe 3.

Le clapet 20 se referme et le piston 4 parvient à son point mort bas puis commence à se déplacer à nouveau vers le haut. L'injection de carburant est effectuée dans le haut du cylindre par l'injecteur 15, sous l'effet de l'air comprimé de la chambre 18. Dans son mouvement vers le haut, le piston 4 masque les ouvertures 9 et 7 et assure la compression du mélange carburé. Le clapet 11a s'ouvre et de l'air est admis dans le carter-pompe 3.

Sur les figures 1 et 2, on a représenté la variation des pressions dans le cylindre, dans la capacité du dispositif d'injection pneumatique et dans la conduite d'échappement en fonction de l'angle du vilebrequin pour un cycle complet, dans le cas d'un moteur deux temps à injection pneumatique selon l'art antérieur et dans le cas d'un moteur deux temps selon l'invention, respectivement.

Sur les figures 1 et 2, on a porté en abscisse la position du point mort bas et du point mort haut (PMB et PMH respectivement). On a également indiqué les positions correspondantes à l'ouverture et à la fermeture des lumières de transfert 9 et les positions correspondantes à l'ouverture et à la fermeture des lumières d'échappement 7.

Dans le cas d'un moteur selon l'art antérieur (Fig. 1), la pression P1 dans le cylindre diminue rapidement lorsque le piston se déplace vers son point mort bas, ce déplacement s'accompagnant de l'ouverture de l'échappement (OE) et du transfert (OT). Il se produit simultanément une sortie des gaz d'échappement dans le conduit 8 et un balayage du cylindre par l'air comprimé dans le carter-pompe 3. La sortie des gaz d'échappement s'accompagne d'effets d'onde de pression qui sont visibles sur la courbe P3 représentant la pression à l'échappement. On voit en particulier que le retour de l'onde de pression se produit vers la fin du balayage déterminée par les instants (FT) et (FE).

Le retour de l'onde de pression vers le cylindre produit des perturbations et une augmentation de la pression P1 dans le cylindre à la fin du balayage.

La pression P2 dans la capacité s'est établie au début du balayage à une valeur maximale correspondant sensiblement à la valeur maximale de la pression dans le carter-pompe 3.

L'injection (I) est déclenchée en fin de balayage, cette période étant favorable à cause de la pression relativement faible dans le cylindre et du plus faible risque d'entrainement du carburant par l'échappement avec les gaz brûlés.

L'injection est assurée par l'air sous pression P2 remplissant la capacité 18. La qualité de la pulvérisation du carburant et de l'injection, au moment de l'ouverture de la tige de l'injecteur 15 dépend de la différence de pression entre la capacité 18 et le cylindre.

Sur le diagramme de la figure 1, cette différence de pression variable au cours de l'injection correspond à la distance verticale entre les courbes P2 et P1. L'étendue de la zone hachurée comprise entre ces courbes pendant l'injection I donne une image de l'énergie utilisable pour l'injection. La différence de pression $\Delta P = P2 - P1$ diminue pendant l'injection pour s'annuler avant la fermeture de l'échappement FE. En effet, la pression P1 augmente d'abord lentement puis rapidement en fin de balayage alors que la pression P2 diminue en cours d'injection, la capacité 18 se vidant d'une partie de son air comprimé.

Sur la figure 2, on a représenté le diagramme de fonctionnement d'un moteur deux temps suivant l'invention comportant un organe de restriction 22 à l'échappement.

La pression P3 dans le conduit d'échappement, en amont de l'organe de restriction 22 subit une augmentation très brusque juste après l'ouverture de l'échappement (OE) qui est due à un effet de bouffée, c'est-à-dire à la forte différence de pression existant entre le cylindre et le conduit d'échappement à l'instant OE. Cependant, cette montée en pression ne se propage pratiquement plus dans le conduit d'échappement, à cause de la présence de l'organe de restriction 22 et la pression retombe d'abord très rapidement puis plus lentement pour s'établir à une valeur minimale vers la fin du balayage.

Les effets d'onde présents dans le cas du moteur selon l'art antérieur (Fig. 1) ont pratiquement disparu et en particulier, il ne se produit pas de retour de l'onde de pression à la fin du balayage. En conséquence, la pression P1 dans le cylindre est peu perturbée et décroît de manière régulière jusqu'à la fin du balayage. Pendant la période d'injection, cette pression est à son minimum et ne remonte très rapidement qu'au moment de la fermeture du transfert et de l'échappement.

D'autre part, la présence de l'organe de restriction 22 ralentit la vidange du cylindre 1 pendant la première partie du balayage, entre l'ouverture de l'échappement (OE) et le point mort bas.

Comme le cylindre se vide plus difficilement dans l'échappement, il en résulte une certaine difficulté de vidange du carter pompe 3 dans le cylindre par les conduits et lumières de transfert 10, 9.

L'air contenu dans le carter qui subit une compression lors du mouvement descendant du piston 1, atteint donc une pression maximale, pendant la phase initiale du balayage, plus élevée que dans le cas où il n'existe pas de restriction de débit dans le conduit d'échappement. La capacité 18 qui est chargée en air comprimé à une pression proche de la pression maximale du carter-pompe 3 atteint donc un palier de pression supérieur (courbe P2) à un niveau plus élevé que dans le cas d'un moteur suivant l'art antérieur.

Il en résulte que la différence de pression ΔP = P2 - P1 est plus grande pendant toute la phase d'injection I, dans le cas d'un moteur suivant l'invention (Fig. 2) que dans le cas d'un moteur suivant l'art antérieur (Fig. 1). Cet effet favorable est obtenu à la fois grâce à une pression P1 plus faible et à une pression P2 plus importante, au moins en début d'injection.

Dans le cas du moteur suivant l'art antérieur sur le même point de fonctionnement, la pression dans le cylindre a une valeur minimale pendant l'injection de l'ordre de 1,05 bar, alors que cette pression minimale n'est que de 1,00 bar dans le cas d'un moteur suivant l'invention.

La pression de chargement P2 de la capacité en début d'injection, est de 1,18 bar dans le cas du moteur suivant l'art antérieur (Fig 1) et de 1,22 bar dans le cas du moteur suivant l'invention.

Il en résulte que dans le cas du moteur suivant l'art antérieur ΔP = 1,18 - 1,05 = 0,13 bar et dans le cas d'un moteur suivant l'invention ΔP = 1,22 - 1,00 = 0,22 bar, en début d'injection.

On obtient donc un gain tout à fait sensible sur la différence de pression, ce qui se traduit par une augmentation notable de la quantité d'air parvenant à l'injecteur et servant à pulvériser le carburant et de même, une augmentation sensible de la vitesse de cet air réalisant la pulvérisation et l'injection.

Le carburant est donc pulvérisé plus finement et introduit dans de meilleurs conditions à l'intérieur du cylindre.

Le réglage de la position d'ouverture ou de fermeture de l'organe de restriction 22 en fonction de la position correspondante du papillon d'admission 13 doit permettre d'obtenir une différence de pression P maximale pendant toute la phase d'injection, conduisant à une énergie d'injection représentée par la zone hachurée sur la figure 2, la plus grande possible.

Dans le mode de réalisation représenté sur la figure 3, la position du papillon 13 varie avec la charge du moteur, si bien que l'ensemble de liaison 24 permet de régler la position de l'organe de restriction 22 également en fonction de la charge du moteur.

Sur la figure 4, on a représenté une variante de réalisation de l'organe de restriction 22' disposé à l'entrée du conduit d'échappement 8. Le dispositif 22' est constitué par un volet tournant articulé autour d'un axe horizontal sur une partie du cylindre 1 ménageant la lumière d'échappement et constituant la partie initiale du conduit 8. Le volet 22' comporte une surface de fermeture qui est susceptible d'obturer au moins partiellement la lumière d'échappement du cylindre, lorsque le volet 22' est en position rabattue.

La surface de fermeture est alors très proche de la chambre du cylindre 1 et le piston 4 et ses segments 40 viennent pratiquement en contact avec cette surface de fermeture lors du balayage de la surface intérieure du cylindre 1.

La figure 9 représente un mode de réalisation où le cylindre 1A comporte un injecteur pneumatique 15A alimenté en carburant par une conduite 16A et en air, ou, plus généralement, en gaz sous pression par le conduit 17A. Ce conduit est alimenté en gaz sous pression à partir du carter 3 d'un autre cylindre. Cet autre cylindre est semblable à celui de la figure 3. Les éléments communs à la figure 9 et à la figure 3 portent les mêmes références sur ces deux figures.

Il existe un décalage angulaire non nul entre les cycles de fonctionnement du cylindre 1A et du cylindre 1.

La référence 8A désigne le conduit d'échappement du cylindre 1A. Ce conduit 8A est connecté au conduit d'échappement 8 en amont du papillon 22, ceci dans le cas où ce dernier est commun aux deux cylindres. Sinon, il peut y avoir un papillon placé au voisinage de l'orifice d'échappement de chaque cylindre en amont de la connexion entre le conduit 8A et le conduit 8.

Le décalage angulaire entre les cycles des deux cylindres 1 et 1A permet de disposer d'une pression d'injection satisfaisante comme décrit dans la demande européenne 88.401569.4 déposée le 22 juin 1988. On pourra d'ailleurs se reporter à cette demande antérieure

Selon le mode de réalisation de la figure 9, le conduit 17A ne comporte pas de clapet anti-retour sur sa partie qui joint le carter 3 à l'injecteur pneumatique 15A.

Ainsi, ce conduit ne joue pas le rôle d'une capacité de stockage de gaz sous pression et son volume peut être faible.

De manière générale, l'organe de restriction du débit d'échappement pourra être constitué par tout papillon, volet ou boisseau disposé à l'intérieur du conduit d'échappement ou au voisinage des lumières d'échappement traversant la paroi du cylindre.

Ces organes d'obturation pourront être reliés mécaniquement par tout moyen tel que des tiges articulées aux papillons ou boisseaux d'admission de l'air dans le carter, dont la position dépend de la charge du moteur.

Il est également possible d'utiliser des organes d'obturation motorisés dont la commande d'ouverture et de fermeture est assurée par des moyens électroniques prenant en compte comme données d'entrée des paramètres traduisant le régime et la charge du moteur. Ces paramètres peuvent être de nature diverses et les données correspondantes obtenues grâce à des capteurs peuvent être relatives par exemple au degré d'ouverture du papillon ou boisseau de la conduite d'admission, ou encore à la valeur de la dépression à l'admission.

D'autres paramètres du moteur traduisant son régime et sa charge peuvent également être mis en compte et parmi ceux-ci la température de l'air à l'admission, la température de l'eau de refroidissement du moteur ou diverses pressions dans le moteur dont la valeur sera comparée à la pression atmosphérique.

Sur les figures 5, 6, 7 et 8, on a représenté schématiquement la culasse 30 d'un moteur à deux temps et à trois cylindres 31a, 31b, 31c. Les conduits d'échappement 32a, 32b, 32c de ces trois cylindres sont reliés à un conduit d'échappement commun 33 dont la disposition par rapport à ces conduits peut être variable.

On a représenté diverses dispositions de ce conduit commun 33.

Dans le cas où ce conduit 33 ne comporte qu'une seule branche (Figs 5 et 6), le dispositif de restriction de débit 35 suivant l'invention sera disposé de préférence à l'entrée de ce conduit commun, de façon à assurer la restriction de débit pour l'ensemble des trois cylindres. Cette disposition a l'avantage de simplifier la structure et la commande du dispositif de restriction de débit commun à l'ensemble des trois cylindres. Cette disposition permet également de profiter des interférences favorables entre les ondes de pression provenant de l'échappement des différents cylindres.

Dans le cas des figures 7 et 8, le conduit 33 comporte deux branches 33a et 33b elles-mêmes reliées à un conduit commun 34.

Dans le cas du mode de réalisation représenté sur la figure 7, deux organes de restriction de débit 35 et 35' sont disposés à l'entrée des branches 33a et 33b et dans le cas de la figure 8, un seul organe de restriction de débit 35 est disposé à l'entré du conduit 34. Cette dernière disposition a l'avantage d'être plus simple mais l'organe de restriction de débit est alors relativement éloigné des cylindres.

Il est bien évident que le moteur suivant l'invention pourra comporter tout type d'organe de restriction du débit à l'échappement commandé à l'ouverture et à la fermeture par tout moyen de type mécanique, électronique ou autre.

Enfin, le moteur suivant l'invention pourra comporter un nombre quelconque de cylindres placés suivant une disposition quelconque.

## Revendications

1. Moteur à deux temps comportant au moins un cylindre (1) dans lequel se déplace un piston (4), un carter (3) communiquant avec l'une des extrémités du cylindre (1) et comportant un moyen d'admission d'air (11a) dans le carter (3), au moins un conduit d'admission d'air non carburé (10) dans le (1) joignant le carter (3) à une ouverture de transfert (9) du cylindre, un dispositif d'injection pneumatique (15), un moyen d'alimentation et de dosage (16) de cet injecteur pneumatique en carburant et un conduit (17) d'alimentation de l'injecteur (15) en air sous pression pour la pulvérisation du carburant relié au carter (3) par l'intermédiaire d'un clapet (20) et constituant une capacité (18) d'air sous pression reliée à l'injecteur pneumatique (15), ainsi qu'un conduit d'échappement (8) relié au cylindre (1), par une ouverture d'échappement située dans une position décalée suivant la direction de la course du piston (4) par rapport à l'ouverture de transfert (9) du cylindre (1), caractérisé par le fait qu'il comporte de plus, à l'intérieur du conduit d'échappement (8), au voisinage du cylindre (1), un organe (22, 22', 35, 35') de restriction du passage des gaz d'échappement commandé et réglé pour son ouverture et sa fermeture, en fonction d'au moins un paramètre de fonctionnement du moteur, le moteur ne comportant pas de conduit reliant ledit conduit d'échappement (8) à ladite capacité (18) d'air sous pression, et ledit organe (22) permettant d'augmenter la pression $P_2$ des gaz d'injection issus du carter (3), et d'éviter l'augmentation de la pression $P_1$ dans le cylindre en fin d'injection (par retour d'onde) de sorte que la différence de pression $\Delta P = P_2 - P_1$ qui est liée à l'énergie d'injection est augmentée.

2. Moteur à deux temps suivant la revendication 1, caractérisé par le fait que l'organe de restriction (22) est un papillon disposé à l'intérieur du conduit d'échappement (8), à proximité du cylindre (1).

3. Moteur à deux temps suivant la revendication 1, caractérisé par le fait que l'organe de restriction (22') est constitué par un volet monté pivotant sur le cylindre (1), à l'entrée du conduit d'échappement (8) et susceptible de masquer de façon réglée la lumière d'échappement du cylindre (1) constituant l'entrée du conduit d'échappement (8).

4. Moteur à deux temps suivant l'une quelconque des revendications 1, 2 et 3, caractérisé par le fait que l'organe de restriction (22, 22') est relié par un ensemble mécanique articulé (24) à un élément (13) de restriction de débit disposé dans un conduit (12) d'admission d'air dans le carter (3).

5. Moteur à deux temps suivant l'une quelconque des revendications 1 à 3, caractérisé par le fait que l'organe de restriction (22, 22') est motorisé et commandé pour son ouverture ou sa fermeture par un dispositif électronique prenant en compte au moins un paramètre traduisant le régime ou la charge du moteur.

6. Moteur à deux temps suivant la revendication 1, comportant au moins deux cylindres (31a, 31b, 31c) dont les conduits d'échappement (32a, 32b, 32c) sont reliés à un conduit commun (33), caractérisé par le fait que l'organe de restriction (35) du passage des gaz d'échappement est disposé dans le conduit commun (33).

7. Moteur à deux temps suivant la revendication 6, caractérisé par le fait que le conduit (33) comporte deux branches (33a, 33b).

8. Moteur à deux temps suivant la revendication 7, caractérisé par le fait qu'un organe de restriction du passage des gaz d'échappement (35, 35') est disposé dans chacune des branches (33a, 33b) du conduit commun (33).

9. Moteur à deux temps suivant la revendication 7, caractérisé par le fait qu'un organe de restriction de passage des gaz d'échappement unique (35) est disposé dans un conduit (34) auquel sont reliées les branches (33a, 33b) du conduit commun (33).

10. Moteur à deux temps comportant un premier cylindre (1A) dans lequel se déplace un premier piston (4A), un second cylindre (1) dans lequel se déplace un autre piston (4); un carter (3) communiquant avec l'une des extrémités dudit second cylindre (1) et comportant un moyen d'admission d'air (11a) dans le carter (3), au moins un conduit (10) d'admission d'air non carburé dans ledit premier cylindre (1A), ledit conduit étant relié à la lumière dudit premier cylindre, un dispositif d'injection pneumatique de carburant dans ledit premier cylindre, comprenant un injecteur pneumatique (15A), un moyen d'alimentation et de dosage (16A) de cet injecteur pneumatique en carburant et un conduit (17A) d'alimentation de l'injecteur (15A) en air sous pression pour la pulvérisation du carburant relié au carter (3), et constituant une capacité (18A) d'air sous pression reliée à l'injecteur pneumatique (15A), ainsi qu'un conduit d'échappement (8A) relié audit premier cylindre (1A), par une ouverture d'échappement située dans la paroi dudit premier cylindre (1A), caractérisé par le fait qu'il comporte de plus, à l'intérieur du conduit d'échappement (8A), au voisinage dudit premier cylindre (1A), un organe (22, 22', 35, 35') de restriction du passage des gaz d'échappement commandé et réglé pour son ouverture et sa fermeture, en fonction d'au moins un paramètre de fonctionnement du moteur, en ce qu'il existe un décalage angulaire non nul entre les cycles desdits cylindres, le moteur ne comportant pas de conduit reliant ledit conduit d'échappement (8A) à ladite capacité (18) d'air sous pression, et ledit organe (22) permettant d'augmenter la pression $P_2$ des gaz d'injection issus du carter (3), et d'éviter l'augmentation de la pression $P_1$ dans le cylindre (1A) en fin d'injection (par retour d'onde) de sorte que la différence de pression $\Delta P = P_2 - P_1$ qui est liée à l'énergie d'injection est augmentée.

11. Moteur selon la revendication 10, caractérisé par le fait que ledit décalage angulaire est de 120° et en ce que le cycle du premier cylindre précède de 120° le cycle de l'autre cylindre.

**12.** Dispositif selon la revendication 10, caractérisé en ce que ledit décalage est de 90° et en ce que le cycle du premier cylindre précède de 90° le cycle de l'autre cylindre.

**13.** Moteur selon la revendication 11, caractérisé en ce que ledit moteur comporte un nombre de cylindres multiple de 3.

**14.** Dispositif selon la revendication 12, caractérisé en ce que ledit moteur comporte un nombre de cylindres multiple de 4.

**15.** Moteur selon l'une des revendications 10 à 14, caractérisé en ce que ledit conduit (17A) d'alimentation de l'injecteur en air sous pression relie directement ledit injecteur pneumatique (15A) audit carter (3).

**Claims**

**1.** Two stroke engine comprising at least one cylinder (1) in which moves a piston (4), a casing (3) communicating with one end of the cylinder (1) and comprising a means of admitting air (11a) into the casing (3), at least one duct for the admission of non-carburetted air (10) into the cylinder (1) and connecting the casing (3) to a transfer port (9) for the cylinder, a pneumatic injector device (15), a means of supplying and metering (16) for this pneumatic fuel injector and a duct (17) for supplying the injector (15) with air under pressure for the automation of the fuel and connected to the casing (3) by means of a valve (20) and comprising a volume (18) of air under pressure connected to the pneumatic injector (15), together with an exhaust duct (8) connected to the (1) by an exhaust port located in a position which is offset in the direction of the stroke of the piston (4) relative to the transfer port (9) for the cylinder (1), characterised in that it also comprises, inside the exhaust duct (8), in the vicinity of the cylinder (1) a device (22, 22', 35, 35') for restricting the flow of exhaust gases, controlled and regulated, as regards its opening and closing, in terms of at least one operating parameter for the engine, the engine not comprising a duct connecting the said exhaust duct (8) to the said volume (18) of air under pressure and the said device (22) permitting the pressure $P_2$ of the injection gases originating from the casing (3) to be increased and preventing an increase in the pressure $P_1$ in the cylinder on completion of injection (wave feedback) so that the difference in pressure

$\Delta P = P_2 - P_1$ associated with the energy of injection is increased.

**2.** Two stroke engine in accordance with claim 1, characterised in that the restriction device (22) is in the form of a butterfly valve positioned inside the exhaust duct (8), in the vicinity of the cylinder (1).

**3.** Two stroke engine in accordance with claim 1, characterised in that the restriction device (22') comprises a flap fitted so that it pivots on the cylinder (1), at the inlet for the exhaust duct (8) and is capable of being regulated to cover the exhaust port of the cylinder (1) comprising the inlet for the exhaust duct (8).

**4.** Two stroke engine in accordance with any one of claims 1, 2 and 3, characterised in that the restriction device (22, 22') is connected by an articulated mechanical assembly (24) to an element (13) for restricting the flow and positioned in a duct (12) admitting air into the casing (3).

**5.** Two stroke engine in accordance with any one of claims 1 to 3, characterised in that the restriction device (22, 22') is motorised and controlled, as regards its opening or closing, by an electronic device which takes into consideration at least one parameter representing the operating conditions or load for the engine.

**6.** Two stroke engine in accordance with claim 1, comprising at least two cylinders (31a, 31b, 31c), the exhaust ducts (32a, 32b, 32c) being connected to a common duct (33), characterised in that the restriction device (35) for the flow of exhaust gases is positioned in the common duct (33).

**7.** Two stroke engine in accordance with claim 6, characterised in that the duct (33) comprises two branches (33a, 33b).

**8.** Two stroke engine in accordance with claim 7, characterised in that a device for restricting the flow of the exhaust gases (35, 35') is positioned in each of the branches (33a, 33b) of the common duct (33).

**9.** Two stroke engine in accordance with claim 7, characterised in that a single device for restricting the flow of exhaust gases (35) is positioned in a duct (34) to which are connected the branches (33a, 33b) of the common duct (33).

10. Two stroke engine comprising a first cylinder (1A) in which moves a first piston (4A), a second cylinder (1) in which moves another piston (4), a casing (3) communicating with one end of the said second cylinder (1) and comprising a means of admitting air (11a) into the casing (3), at least one duct (10) for the admission of non carburetted air into the first cylinder (1A), the said duct being connected to the port of the said first cylinder, a pneumatic device for the injection of fuel into the said first cylinder, comprising a pneumatic injector (15A), a means of supplying and metering (16A) for this pneumatic fuel injector and a duct (17A) for supplying the injector (15A) with air under pressure for the atomisation of fuel and connected to the casing (3) and comprising a volume (18A) of air under pressure connected to the pneumatic injector (15A), together with an exhaust duct (8A) connected to the said first cylinder (1A), by an exhaust port located in the wall of the said first cylinder (1A), characterised in that it also comprises, inside the exhaust duct (8A), in the vicinity of the said first cylinder (1A), a device (22, 22', 35, 35') for restricting the flow of exhaust gases, controlled and regulated as regards its opening and closing, in terms of at least one operating parameter for the engine, in that there is a significant angular offset between the cycles of the said cylinders, the engine not comprising a duct connecting the said exhaust duct (8A) to the said volume (18) of air under pressure and the said device (22) permitting the pressure $P_2$ of the injection gases originating from the casing (3) to be increased and preventing an increase in the pressure $P_1$ in the cylinder (1A) on completion of injection (wave feedback) so that the difference in pressure $\Delta P = P_2 - P_1$ associated with the energy of injection is increased.

11. Engine in accordance with claim 10, characterised in that the said angular offset is 120° and in that the cycle for the first cylinder precedes the cycle for the other cylinder by 120°.

12. Device in accordance with claim 10 characterised in that the said offset is 90° and in that the cycle for the first cylinder precedes the cycle for the other cylinder by 90°.

13. Engine in accordance with claim 11, characterised in that the said engine comprises a number of cylinders in multiples of three.

14. Device in accordance with claim 12, characterised in that the said engine comprises a number of cylinders in multiples of four.

15. Engine in accordance with one of claims 10 to 14, characterised in that the said duct (17A) for supplying the injector with air under pressure directly connects the said pneumatic injector (15A) to the said casing (3).

**Patentansprüche**

1. Zweitaktbrennkraftmaschine mit wenigstens einem Zylinder (1), in dem sich ein Kolben (4) bewegt, mit einem mit einem der Enden des Zylinders (1) in Verbindung stehenden Gehäuse (3) und mit einem Lufteinlaßmittel (11A) in das Gehäuse (3), wenigstens einer Einlaßleitung für Nicht-Vergaserluft (10) in den Zylinder (1), welche das Gehäuse (1) mit einer Durchgangsöffnung (9) des Zylinders verbindet, einer pneumatischen Injektoreinrichtung (15), einem Speise- und Dosiermittel (16) dieses pneumatischen Injektors mit
Brennstoff und einer Leitung (17) zum Speisen des Injektors (15) mit Luft unter Druck zur Zerstäubung des Brennstoffs, verbunden mit dem Gehäuse (3) vermittels eines Klappenventils (20) und unter Bildung eines Raumes (18) für Luft unter Druck, verbunden mit dem pneumatischen Injektor (15), sowie einer Auslaßleitung (18), die mit dem Zylinder (1) über eine Auslaßöffnung verbunden ist, die in einer entsprechend der Richtung des Hubs des Kolbens (4), bezogen auf die Durchgangsöffnung (9), des Zylinders (1), versetzten Stellung angeordnet ist, dadurch gekennzeichnet, daß sie darüberhinaus im Inneren der Auslaßleitung (8), benachbart dem Zylinder (1), ein Organ (22, 22', 35, 35') zur Begrenzung des Durchgangs der Auslaßgase in einer, durch ihr Öffnen und Schließen gesteuerten und einstellbaren Weise, als Funktion wenigstens eines Arbeitsparameters der Brennkraftmaschine aufweist, wobei die Brennkraftmaschine keine diese Auslaßleitung (8) mit diesem Raum (18) für Luft unter Druck verbindenende Leitung umfaßt und dieses Organ (22) es ermöglicht, den Druck $P_2$, der aus dem Gehäuse (3) stammenden Injektorgase zu erhöhen und zu vermeiden, daß der Druck $P_1$ im Zylinder bei Injektionsende (durch Wellenrücklauf) erhöht wird, derart, daß die Druckdifferenz $P = P_2 - P_1$, die mit der Injektionsenergie verknüpft ist, erhöht wird.

2. Zweitaktbrennkraftmaschine nach Anspruch 1, dadurch gekennzeichnet, daß das Begrenzerorgan (22) eine im Inneren der Auslaßleitung (8)

benachbart dem Zylinder (1) angeordnete Stellklappe ist.

3. Zweitaktbrennkraftmaschine, nach Anspruch 1, dadurch gekennzeichnet, daß das Begrenzerorgan (22') gebildet wird, durch eine Klappe, die schwenkbar am Zylinder (1) am Eintritt der Auslaßleitung (8) gelagert und in der Lage ist, in geregelter Weise den Auslaßschlitz des Zylinders (1), der den Eintritt in die Auslaßleitung (8) bildet, zu verlegen.

4. Zweitaktbrennkraftmaschine nach einem der Ansprüche 1, 2 und 3, dadurch gekennzeichnet, daß das Begrenzerorgan (22, 22') über eine mechanische gelenkige Anordnung (24), mit einem Durchlaßbegrenzerelement (13) verbunden ist, das in einer Lufteinlaßleitung (12) in das Gehäuse (3) angeordnet ist.

5. Zweitaktbrennkraftmaschine nach einem der Ansprüche 1 - 3, dadurch gekennzeichnet, daß das Begrenzerorgan (22, 22') angetrieben und für sein Öffnen oder sein Schließen durch ein elektronisches Gerät unter Berücksichtigung wenigstens eines Parameters gesteuert ist, der die Drehzahl oder die Last des Motors umsetzt.

6. Zweitaktkraftbrennmaschine nach Anspruch 1 mit wenigstens zwei Zylindern (31a, 31b, 31c), deren Auslaßleitungen (32a, 32b, 32c) mit einer gemeinsamen Leitung (33) verbunden sind, dadurch gekennzeichnet, daß das Begrenzerorgan (35) für den Durchlaß der Auslaßgase in der gemeinsamen Leitung (33) angeordnet ist.

7. Zweitaktbrennkraftmaschine nach Anspruch 6, dadurch gekennzeichnet, daß die Leitung (33) Zweigleitungen (33a, 33b) umfasst.

8. Zweitaktbrennkraftmaschine nach Anspruch 7, dadurch gekennzeichnet, daß ein Begrenzerorgan für den Durchgang der Austrittsgase (35, 35') in jeder der Zweigleitungen (33a, 33b) der gemeinsamen Leitung (33) angeordnet ist.

9. Zweitaktbrennkraftmaschine nach Anspruch 7, dadurch gekennzeichnet, daß ein einziges Organ (35) zur Durchgangsbegrenzung der Auslaßgase in einer Leitung (34) angeordnet ist, mit der die Zweigleitungen (33a, 33b) der gemeinsamen Leitung (33) verbunden sind.

10. Zweitaktbrennkraftmaschine mit einem ersten Zylinder (1A), in dem ein erster Kolben (4A) sich bewegt, einem zweiten Zylinder (1), in welchem sich ein anderer Kolben (4) bewegt;

einem mit einem der Enden dieses zweiten Zylinders (1) in Verbindung stehenden Gehäuses (3), welches ein Lufteinlaßmittel (11A) in das Gehäuse (3) umfasst, wenigstens eine Einlaßleitung (10) für nicht vergaste Luft in den ersten Zylinder (1A), wobei die Leitung verbunden ist mit dem Schlitz des ersten Zylinders, einer pneumatischen Injektoreinrichtung für Brennstoff in den ersten Zylinder, einen pneumatischen Injektor (15A) umfassend, einem Speise- und Dosiermittel (16A) dieses pneumatischen Injektors mit Brennstoff und einer Leitung (17A) zur Speisung des Injektors (15A) mit Luft unter Druck zur Zerstäubung des Brennstoffs, verbunden mit dem Gehäuse (3) und einen Raum (18A) für Luft unter Druck bildend, der mit dem pneumatischen Injektor (15A) verbunden ist, sowie einer Auslaßleitung (8A), die mit dem ersten Zylinder (1A) über eine Auslaßöffnung verbunden ist, die sich in der Wandung des ersten Zylinders (1A) befindet, dadurch gekennzeichnet, daß sie darüberhinaus im Inneren der Auslaßleitung (8A), benachbart diesem ersten Zylinder (1A), ein Organ (22, 22', 35, 35') zur Begrenzung des Durchgangs der Auslaßgase umfasst, das für sein Öffnen und Schließen gesteuert und geregelt bzw. eingestellt ist als Funktion wenigstens eines Arbeitsparameters der Brennkraftmaschine, daß eine Winkelverschiebung ungleich 0 zwischen den Takten dieser Zylinder besteht, wobei der Motor keine dieser Auslaßleitungen (8A) mit dem Raum (18) für Luft unter Druck verbindende Leitung umfaßt und dieses Organ (22) es zuläßt, daß der Druck $P_2$, der aus dem Gehäuse (3) stammenden Injektorgase erhöht wird und eine Erhöhung des Drucks $P_1$ im Zylinder (1A) bei Injektionsende (durch Wellenrücklauf) vermieden wird, derart, daß die Druckdifferenz $P = P_2 - P_1$, die mit der Injektorenergie verknüpft ist, erhöht wird.

11. Brennkraftmaschine nach Anspruch 10, dadurch gekennzeichnet, daß diese Winkelverschiebung 120 Grad beträgt und daß der Takt des ersten Zylinders dem Takt des anderen Zylinders um 120 Grad voreilt.

12. Brennkraftmaschine nach Anspruch 10, dadurch gekennzeichnet, daß diese Verschiebung 90 Grad beträgt und daß der Takt des ersten Zylinders dem Takt des anderen Zylinders um 90 Grad voreilt.

13. Brennkraftmaschine nach Anspruch 11, dadurch gekennzeichnet, daß diese Brennkraftmaschine eine Zylinderzahl umfaßt, die ein Vielfaches von drei ausmacht.

**14.** Vorrichtung, nach Anspruch 12, dadurch gekennzeichnet, daß diese Brennkraftmaschine eine Anzahl von Zylindern umfaßt, die ein Vielfaches von vier ausmacht.

**15.** Brennkraftmaschine, nach einem der Ansprüche 10 - 14, dadurch gekennzeichnet, daß die Leitung (17A) zum Speisen des Injektors mit unter Druck stehender Luft direkt diesen pneumatischen Injektor (15A) mit dem Gehäuse (3) verbindet.

**FIG.1**

EP 0 311 499 B1

FIG.2

EP 0 311 499 B1

**FIG.3**

**FIG.4**

**FIG.5**

**FIG.6**

**FIG.7**

**FIG.8**

**FIG.9**

14